# EUROPÄISCHE PATENTANMELDUNG

(11) **EP 4 014 708 A1**
(43) Veröffentlichungstag der Anmeldung: **22.06.2022**
(21) Anmeldenummer: 21212711.2
(22) Anmeldetag: 07.12.2021
(51) Int. Cl.: A01C 23/00, B05B 13/00, A01M 7/00, A01B 59/04, A01B 59/043, A01B 59/06, A01B 63/00

(54) **FELDSPRITZE**

(30) Priorität: 16.12.2020 DE 202020107319 U
(71) Anmelder: Kraus, Thomas, 97318 Biebelried (DE)
(72) Erfinder: Kraus, Thomas, 97318 Biebelried (DE)
(74) Vertreter: Gleim, Christian Ragnar

(57) **Zusammenfassung**

Landwirtschaftliche Feldspritze zur Ankopplung an eine Zugmaschine, dadurch gekennzeichnet, dass die Feldspritze ein Fahrgestell mit einer Koppeleinheit umfasst, wobei die Koppeleinheit Koppelstücke umfasst, die derart ausgebildet sind, um an mindestens zwei separaten Aufnahmen einer Zugmaschine ankoppelbar zu sein, und wobei sich am Fahrgestell oder an der Koppeleinheit der Feldspritze kein Drehpunkt um eine Hochachse befindet, sodass die Zugmaschine und die Feldspritze starr um die Hochachse miteinander verbunden sind, und wobei sich am Fahrgestell oder an einer Achse mindestens ein um eine Hochachse schwenkbarer Radträger befindet.

## Beschreibung

Die Erfindung betrifft eine an eine Zugmaschine ankoppelbare landwirtschaftliche Feldspritze (Spritze).

Die Einsatzzwecke derartiger Feldspritzen sind vielfältig und liegen zum Beispiel in der Verteilung flüssiger Medien wie Pflanzenschutzmittel und deren Trägerstoffe sowie Düngemittel und dergleichen auf landwirtschaftlichen Flächen. Zu diesem Zweck verfügt eine Feldspritze über eine Speicherkammer für das zu verteilende flüssige Medium (Tank) sowie über ein sich quer zur Fahrtrichtung erstreckendes Verteilergestänge. Dieses Gestänge bildet in ausgeklapptem Zustand die Arbeitsbreite der Spritze.

Eine Ausführungsvariante von Feldspritzen besteht darin, diese direkt an der Zugmaschine mittels Dreipunktanbau zu befestigen, sodass deren Gewicht komplett vom Zugfahrzeug getragen wird. Die Leistungsfähigkeit einer Feldspritze wird maßgeblich durch die Größe des Flüssigkeitstanks und durch die Breite des Verteilergestänges beeinflusst. Je größer diese Bestandteile der Spritze sind, desto schwerer wird diese jedoch. Da das Zugfahrzeug nur über eine begrenzte Hubkraft und Tragfähigkeit verfügt, führt dies dazu, dass getragene Spritzen in ihrer Größe und damit ebenso in ihrer Leistungsfähigkeit begrenzt sind.

Es ist daher eine weitere Ausführungsvariante von Feldspritzen in Verbindung mit Zugfahrzeugen bekannt. Feldspritzen werden mit einem eigenen Fahrwerk ausgestattet, um diese an der Zugmaschine zu ziehen. Das Gewicht der gezogenen Spritze liegt dabei zum Großteil auf der eigenen Achse oder, sofern mehrere Achsen vorhanden sind, auf mehreren Achsen des Fahrwerks, und teilweise auf dem Zugfahrzeug. Die Zugdeichsel ist an einem Ende fest mit dem Fahrwerk verbunden bzw. bildet einen Teil des Fahrwerks und ist am anderen Ende mit dem Zugfahrzeug gekoppelt. Das Fahrwerk der gezogenen Spritze ist dabei mit einer Zugdeichsel über die Unterlenker eines Dreipunkthubwerks, eine Kugelkopfkupplung oder über ein Zugmaul an das Zugfahrzeug gekoppelt. Aufgrund des zusätzlichen Fahrwerks können gezogene Spritzen mit deutlich größeren Tanks und Verteilergestängen ausgestattet werden.

Die Verbindung zwischen Zugfahrzeug und Spritze ist dabei so ausgeführt, dass sich die Zugdeichsel und die damit verbundene Spritze relativ zur Zugmaschine in mehrere Richtungen bewegen kann. In der Regel ist eine Nickbewegung und Rotationsbewegung zwischen Zugfahrzeug und Spritze möglich. Die Rotationsbewegung um die Verbindungsachse führt dazu, dass zum Beispiel beim Befahren eines stark geneigten Feldes in Schichtlinie, die Spritze, welche in der Regel über einen höheren Schwerpunkt als das Zugfahrzeug verfügt, deutlich früher zum seitlichen Umkippen neigt. In diesen Grenzsituationen kann eine Verbindung zwischen Zugfahrzeug und Feldspritze, welche keine Rotation um die Verbindungsachse ermöglicht, ein Umkippen der Spritze verhindern.

Außerdem ist eine Knickbewegung des Gespanns aus Spritze und Zugmaschine um die Hochachse, zum Beispiel bei einer Kurvenfahrt, möglich. Aufgrund dieser Gierbewegung bewegt sich die Zugdeichsel der Spritze seitlich auf das Zugfahrzeug zu. Weil die Verbindung zwischen Zugmaschine und Spritze um die Hochachse drehbar ist, ergeben sich weitere Nachteile. Bei Rückwärtsfahrten ist die Manövrierfähigkeit eingeschränkt bzw. ungenau, was bei Rangiermanövern in einem bewachsenen Feld zu Schäden am Pflanzenbestand durch Überfahrung führt. Bei der Vorwärtsfahrt weicht der Kurvenradius der Spritze vom Kurvenradius des Zugfahrzeugs ab, was ebenso zusätzliche Schäden im Pflanzenbestand verursacht. Außerdem kann eine Kurve nicht beliebig eng befahren werden, da bei zu enger Fahrt die Zugdeichsel das kurveninnere Hinterrad der Zugmaschine berührt.

Es ist die Aufgabe der vorliegenden Erfindung eine verbesserte, an eine Zugmaschine ankoppelbare, landwirtschaftliche Feldspritze bereitzustellen, welche die im Stand der Technik genannten Nachteile überwindet. Es ist ferner die Aufgabe, eine Feldspritze bereitzustellen, bei der die Bewegungen zwischen Zugmaschine und Feldspritze (nicken, gieren, rotieren) eingeschränkt sind und welche sich trotz Fahrwerk gut manövrieren lässt.

Die Aufgabe wird durch eine landwirtschaftliche Feldspritze gemäß Anspruch 1 gelöst. Vorteilhafte Aspekte bilden den Gegenstand der jeweiligen Unteransprüche.

Die Erfindung umfasst eine landwirtschaftliche Feldspritze zur Ankopplung an eine Zugmaschine, in der Regel einen Traktor. Sie umfasst ein Fahrgestell mit daran befindlichen Rädern, welche vorzugsweise mittels einer Achse am Fahrgestell befestigt sind. Die Verbindung zur Zugmaschine wird über eine Koppeleinheit hergestellt. Die Koppeleinheit umfasst mindestens zwei Koppelstücke, die derart ausgebildet sind, um an mindestens zwei separaten Aufnahmen einer Zugmaschine ankoppelbar zu sein. Die Kopplungspunkte der Koppeleinheit sind dabei annähernd symmetrisch zur Fahrzeuglängsachse angeordnet und in etwa gleicher Höhe vom Boden befestigt, sodass diese zur Verbindung mit den Unterlenkern eines Dreipunkthubwerks geeignet sind. Dreipunkthubwerke verfügen in der Regel über Seitenstreben, welche die seitlichen Bewegungen der Unterlenker unterbinden können. In bevorzugter Ausführung werden die Unterlenker der Zugmaschine durch die vorhandenen Seitenstreben fixiert, sodass keine seitliche Bewegung der Unterlenker möglich ist. Am Fahrgestell zwischen den Kopplungspunkten der Spritze und der Fahrwerksachse befindet sich kein Drehpunkt um eine Hochachse welcher eine Relativbewegung zwischen Zugfahrzeug und Feldspritze (gieren) bei Kurvenfahrt ermöglichen würde. Die Verbindung zwischen dem Fahrgestell der Feldspritze und Zugfahrzeug ist somit starr ausgeführt, sodass die Bewegung relativ zueinander um eine Hochachse weitgehend unterbunden ist (geringes Spiel kann möglich sein). Wegen der starren Verbindung über mindestens zwei Ankopplungspunkte zur Kraftübertragung ist es möglich, dass die Bewegung der Feldspritze relativ zur Zugmaschine, zur Vermeidung des Gierens, fast völlig unterbunden ist. Jedes Koppelstück ist fest mit dem Rahmengestell der Feldspritze verbunden. Das Rad bzw. die Räder sind in der Rollrichtung relativ zum Fahrgestell steuerbar, was ein Einlenken zur Änderung der Richtung ermöglicht (Achsschenkellenkung).

Gemäß einem bevorzugten Aspekt umfasst die Koppeleinheit ein erstes Koppelstück (zum Beispiel mit einer Kugelhülse zur Befestigung in einem Fanghaken eines Dreipunkthubwerks) zur Ankopplung an einen ersten Unterlenker (mittels Fanghaken) eines Dreipunkthubwerks, ein zweites Koppelstück (zum Beispiel mit einer Kugelhülse zur Befestigung in einem Fanghaken eines Dreipunkthubwerks) zur Ankopplung an einen zweiten Unterlenker (mittels Fanghaken) eines Dreipunkthubwerks und ein drittes Koppelstück zur Verbindung mit einer Oberlenkeraufnahme eines Dreipunkthubwerks, welches sich oberhalb der Aufnahme für die Unterlenker befindet. Auf diese Weise lässt sich die Verbindung zwischen Feldspritze und Zugmaschine so ausführen, dass zusätzlich die Bewegung des Nickens relativ zueinander starr gestellt, das heißt unterbunden, ist. Außerdem kann über die Verbindung über drei Punkte die Gewichtsbelastung durch die Feldspritze auf die Zugmaschine gesteuert werden.

Die Verbindung am dritten Kopplungspunkt kann auch hydraulisch oder mechanisch vorgespannt sein, sodass durch die Wahl der Vorspannung die Gewichtsverteilung zwischen Zugfahrzeug und Fahrwerksachse gesteuert werden kann und eine begrenzte Drehbewegung um eine Querachse (zum Beispiel um die Verbindungsachse der beiden unteren Koppelpunkte) weiterhin möglich ist. Dies kann zugmaschinenseitig durch eine variable Länge des Oberlenkers oder geräteseitig durch einen variablen Kopplungspunkt für den Oberlenker ( zum Beispiel eine hydropneumatisch federnde Aufnahme für den Oberlenkerbolzen) erfolgen. Das Maß der Beweglichkeit ist derart gewählt, um auftretende Spannungen am Rahmengestell zu reduzieren oder abzufedern, sowie um eine bessere Geländeanpassung des Gespanns zu erreichen. Eine derartige Verbindung wird als begrenzt drehbare Verbindung um eine Querachse bezeichnet. Sofern keine Oberlenkerverbindung zwischen Zugfahrzeug und Maschine besteht, ist eine freie Nickbewegung zum Beispiel um die Verbindungsachse der Unterlenker (Querachse) möglich.

Das Fahrgestell oder die Koppeleinheit kann außerdem einen Drehpunkt um die Längsachse des Gespanns zur besseren Geländeanpassung aufweisen. Das Fahrgestell oder die Koppeleinheit kann zur Begrenzung der Rotationsbewegung zum Beispiel feste Anschläge zur Begrenzung der Drehbewegung um die Längsachse aufweisen. Eine derartige Verbindung wird als begrenzt drehbare Verbindung um eine Längsachse bezeichnet. Sofern sich kein Drehpunkt um eine Längsachse am Fahrgestell befindet, wird die Verbindung als starr bezeichnet, da durch die Ankopplung der beiden Unterlenker dann keine Drehbewegung des Fahrgestells um die Längsachse mehr möglich ist. Die Geländeanpassung quer zur Fahrtrichtung erfolgt dann zum Beispiel über eine drehbar am Fahrgestell gelagerte Achse (Pendelachse) oder eine Federung welche den Rädern eine Vertikalbewegung relativ zum Fahrgestell erlaubt.

Gemäß einem bevorzugten Aspekt sind zwei Räder an der Achse angeordnet. Jedes Rad ist über einem um die Hochachse schwenkbaren Radträger an der Achse angeordnet. Es kann vorgesehen sein, dass die Radträger an der Achse frei um 360 Grad schwenkbar gelagert sind um sich nur mittels Nachlauflenkung automatisch in Fahrtrichtung ausrichten zu können (ähnlich den Rollen eines Bürostuhls). In bevorzugter Ausführung weisen die Radträger jedoch einen maximalen Lenkeinschlag auf. Auf diese Art und Weise lässt sich die aufgrund ihrer Stabilität bei landwirtschaftlichen Geräten bewährte Achsschenkellenkung herstellen. Dazu verfügt das Fahrgestell über eine Lenkeinheit, wobei Spurstange und Lenkaktor mit beiden Radträgern der Achse verbunden sind. Die Spurstange wird über den Lenkaktor bewegt. Lenkaktor und Spurstange können in einem Bauteil vereint sein, sodass zum Beispiel die Kolbenstange eines hydraulischen Lenkzylinders einen Teil der Spurstange bildet. Nicht frei schwenkbare Radträger ermöglichen somit, dass diese mit einer aktiven Lenkung und auch einer Betriebsbremse ausgestattet werden können. Frei schwenkbare Räder benötigen (zum Beispiel bei Rückwärtsfahrt) den gleichen Bauraum in alle Richtungen. Eine Bauweise mit nicht frei schwenkbaren Radträgern spart somit Bauraum und lässt deutlich größere Räder und damit höhere Tragfähigkeiten zu.

Die Lenkung erfolgt bevorzugt automatisiert, sodass mindestens ein an der Achse angeordnetes Rad in Rollrichtung relativ zum Fahrgestell in Abhängigkeit von der Lenkstellung des Zugfahrzeugs automatisch steuerbar ist. Es ist besonders bevorzugt, dass die Steuervorrichtung derart ausgebildet ist, um die Lenkstellung des damit verbundenen Zugfahrzeugs zu ermitteln. Dadurch kann die Rollrichtung der Räder relativ zum Fahrgestell automatisch anhand der Lenkstellung des Zugfahrzeugs gesteuert werden. So kann es vorteilhafterweise vorgesehen sein, anhand der Lenkbewegung der Zugmaschine, die Lenkbewegung der Räder der Feldspritze automatisch folgen zu lassen. Der Aufbau einer derartigen automatisierten Lenkung kann so sein, dass ein Winkelmesser oder ein anderer geeigneter Sensor den Einschlag der Vorderachse des Zugfahrzeugs ermittelt (möglich ist auch die Nutzung eines bereits vorhandenen Lenkwinkelsensors der Zugmaschine), und an eine Recheneinheit (Steuerung) weitergibt. Diese errechnet dann anhand vorgegebener Parameter den erforderlichen Lenkwinkel-Sollwert der Fahrwerksachse an der Feldspritze. Die Fahrwerksachse der Feldspritze verfügt ebenfalls über mindestens einen Lenkwinkelsensor, der die Winkelstellung der Räder relativ zum Fahrgestell widergibt. Der Lenkaktor bewegen nun die Räder in die gewünschte Lenkrichtung, bis der Sollwert am Lenkwinkelsensor an der Feldspritze erreicht ist. In die Berechnung des Lenkwinkel-Sollwertes können verschiedene Parameter einbezogen werden. Vor allem, jedoch nicht ausschließlich sind dies der Radstand des Zugfahrzeugs, der Radstand zwischen der Hinterachse des Zugfahrzeugs und der Fahrwerksachse der Feldspritze und die Fahrgeschwindigkeit. Auch eine Freigabe der Lenkung kann in bestimmten Situationen sinnvoll sein. Dazu ist es erforderlich, dass die Fahrwerksachse einen Nachlauf in Fahrtrichtung aufweist. Dies ermöglicht es, dass bei Vorwärtsfahrt die Räder des Fahrwerks bei deaktivierter Steuerung der Richtung des Zugfahrzeugs automatisch folgen. Der Lenkaktor wird dazu auf freie Beweglichkeit geschaltet, sodass nicht der Lenkaktor die Räder bewegt, sondern umgekehrt die Räder den Lenkaktor bewegen. Bei Fahrten in Schichtlinie am Hang, kann es erforderlich sein, dass die Fahrwerksachse manuell bedient werden muss oder die Lenkachsen am Zugfahrzeug und an der Feldspritze parallel einschlagen (sogenannter Hundegang) um den seitlichen Hangabdrift auszugleichen.

Die automatisierte aktive Lenkung ermöglicht es, das Fahrwerk auch bei Rückwärtsfahrt präzise zu lenken und bereits im Stillstand durch Drehung des Lenkrads am Zugfahrzeug die gewünschte Richtung auch an der Feldspritze zu beeinflussen. Dies bedeutet vor allem bei Rückwärtsfahrten und Rangiermanövern eine höhere Präzision und für den Fahrer eine vereinfachte Bedienung.

Die Erfindung wird im Folgenden anhand der in den Zeichnungen dargestellten Beispiele zusätzlich erläutert. Es zeigen:
- Fig. 1: eine schematische Darstellung einer landwirtschaftlichen Feldspritze, die an einem Zugfahrzeug (Traktor) angekoppelt ist.
- Fig. 2: eine schematische Draufsicht eines Gespanns aus dem Fahrwerk der Feldspritze und Zugfahrzeug bei einer Kurvenfahrt.

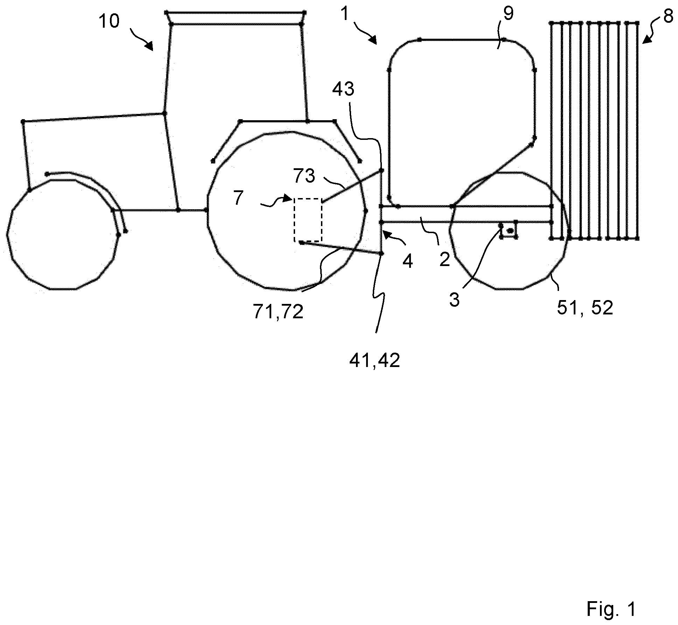

In **Fig. 1** ist eine landwirtschaftliche Feldspritze 1, die an eine Zugmaschine 10 angekoppelt ist, zur Verdeutlichung der Erfindung in einer schematischen Strichzeichnung dargestellt.

Die Feldspritze 1 hat ein Fahrgestell 2, an dem eine Achse 3 mit zwei Rädern 51, 52 angeordnet ist. Zum Ankoppeln an die Zugmaschine 10 hat das Fahrgestell 2 eine Koppeleinheit 4. Auf dem Fahrgestell 2 ist ein Behälter 9 für ein flüssiges Medium angeordnet. Am Fahrgestell 2 befindet sich weiterhin das Verteilergestänge 8, welches in eingeklappten Zustand abgebildet ist. In dieser Abbildung handelt es sich um ein heckgeklapptes Verteilergestänge 8. Dieses kann genauso durch ein in Fahrtrichtung seitlich geklapptes Verteilergestänge 8 ersetzt werden. In ausgeklappten Zustand wird das Verteilergestänge 8 rechtwinklig zur Fahrtrichtung horizontal über das Feld bewegt.

Die Koppeleinheit 4 hat drei Koppelstücke 41,42,43 mit denen diese an drei separaten Aufnahmen des Dreipunkthubwerks 7 an der Zugmaschine 10 angekoppelt ist. Die Koppeleinheit 4 umfasst dazu das erste Koppelstück 41 zur Ankopplung an einen ersten Unterlenker 71 eines Dreipunkthubwerks 7 an der Zugmaschine 10 und das zweite Koppelstück 42 zur Ankopplung an einen zweiten Unterlenker 72 des Dreipunkthubwerks 7, wobei die Koppelstücke 41,42 in der gezeigten Darstellung hintereinander liegen und nicht separat dargestellt sind. Ein drittes Koppelstück 43 wird oben an der Koppeleinheit 4 durch eine Aufnahme gebildet, in der ein Oberlenker 73 des Dreipunkthubwerks 7 befestigt werden kann.

Wegen der Verbindung über drei Ankopplungspunkte (Koppelstücke 41, 42, 43), bei der sich die Länge entlang der jeweiligen Verbindungsachse nicht ändert, ist es möglich, die Bewegung der Feldspritze 1 relativ zur Zugmaschine 10 einzuschränken und die bereits erläuterten Bewegungen wie Nicken, Gieren und Rotieren zu unterbinden (starre Verbindung) oder einzuschränken (begrenzt drehbare Verbindung um eine Quer- oder Längsachse). Durch die Ankopplung an allen drei Punkten eines Dreipunkthubwerks 7 kann über die Verbindung die Gewichtsbelastung durch die Feldspritze 1 auf die Zugmaschine 10 gesteuert werden, indem beispielsweise die Unterlenker 41, 42 bei starrer Oberlenkerverbindung angehoben oder abgesenkt werden. Bevorzugt kann bei gleichbleibender Position der Unterlenker 41, 42 zur Steuerung der Gewichtsbelastung auch die Länge bzw. der Vorspanndruck des Oberlenkers 73 oder die Position bzw. der Vorspanndruck der Oberlenkeraufnahme 43 an der Feldspritze variiert werden. Als begrenzt drehbar wird eine Verbindungsachse zwischen Feldspritze 1 und Zugmaschine 10 bezeichnet, sofern um die Längs- oder Querachse eine Bewegung in begrenztem Umfang möglich ist. Hierzu kann die Feldspritze 1 über entsprechende Drehpunkte (nicht dargestellt) am Fahrgestell 2 oder der Koppeleinheit 4 verfügen. In bevorzugter Ausführung ist nur eine Bewegung um die Verbindungsachse der Unterlenkeraufnahmen 41, 42 möglich, welche durch eine variable Oberlenkerverbindung 43 ermöglicht und gleichzeitig begrenzt wird.

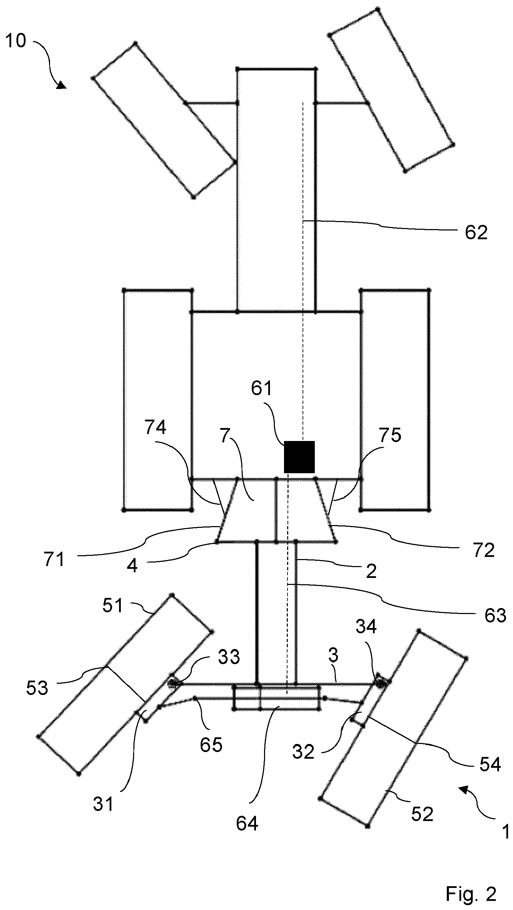

**Fig. 2** ist eine schematische Draufsicht des in Fig. 1 gezeigten Gespanns aus Feldspritze 1 und Zugmaschine 10 bei einer Kurvenfahrt.

Die Unterlenker 71, 72 des Dreipunkthubwerks 7 verfügen über Seitenstreben 74, 75, welche diese seitlich fixieren. Wegen der starren Verbindung von Koppeleinheit 4 an dem Dreipunkthubwerk 7 ist die Bewegung der Feldspritze 1 relativ zur Zugmaschine 10 in drei Richtungen eingeschränkt und die bereits erläuterten Bewegungen wie Nicken, Gieren und Rotieren nicht oder nur eingeschränkt möglich.

Weil das Gespann aus Feldspritze 1 und Zugmaschine 10 keine Gierbewegung um die Hochachse ausführen kann, müssen die Räder 51, 52 wie dargestellt eine Relativbewegung zum Fahrgestell 2 ausführen können, damit eine weitgehend spannungsfreie Kurvenfahrt gewährleistet ist. Hierzu wird eine Lenkeinheit an der Feldspritze 1 benötigt.

Die Steuerung 61 ermittelt die Lenkstellung der Zugmaschine 10 über eine Verbindung zur Zugmaschine 62. Der Begriff Verbindung schließt alle bekannten Möglichkeiten der Daten- und Elektrizitätsübertragung ein. Der Lenkeinschlag wird vorzugsweise über einen bereits an der Zugmaschine 10 vorhandenen oder einen für diesen Zweck angebrachten Winkelmesser (nicht dargestellt) gemessen und an die Steuerung 61 übermittelt. Die Steuerung 61 errechnet dann den benötigten Lenkwinkel-Sollwert an der Feldspritze 1. Der Lenkwinkel-Istwert der Feldspritze 1 wird ebenfalls vorzugsweise über einen Winkelmesser (nicht dargestellt) gemessen und über eine Verbindung 63 an die Steuerung 61 übermittelt. Die Steuerung 61 bewegt nun zum Beispiel mittels hydraulischen Drucks den Lenkaktor 64 in die gewünschte Richtung, bis der Lenkwinkel-Istwert dem Lenkwinkel-Sollwert an der Feldspritze 1 entspricht. Der Lenkaktor 64, welcher hier in Form eines hydraulischen Lenkzylinders dargestellt ist, ist über eine Spurstange 65 mit beiden Radträgern 31, 32 verbunden. An den Radträgern 31, 32 sind die Räder 51, 52 über ein Radlager (nicht dargestellt) drehbar angeordnet. Die Drehpunkte 33, 34 der Achse 3 befinden sich in bevorzugter Ausführung in Fahrtrichtung vor den jeweiligen Mittelpunkten der Räder 53, 54. Dies bewirkt, dass sich die Räder 51, 52 bei Vorwärtsfahrt auch bei deaktivierter Steuerung 61 und frei beweglichem Lenkaktor 64 automatisch in Fahrtrichtung ausrichten können (Nachlauflenkung).

Die Steuermöglichkeit erlaubt das Ausscheren der Feldspritze 1 bei Kurvenfahrt aufgrund der starren Verbindung um die Hochachse. Eine Alternative dazu ist die manuelle Lenkung der Rollrichtung, zum Beispiel über einen Hydraulikbedienvorrichtung in der Kabine des Zugmaschine 10 welche auf den Lenkaktor 64 wirkt.

## Patentansprüche

1. Landwirtschaftliche Feldspritze (1) zur Ankopplung an eine Zugmaschine (10), **dadurch gekennzeichnet, dass** die Feldspritze (1) ein Fahrgestell (2) mit einer Koppeleinheit (4) umfasst, wobei die Koppeleinheit (4) Koppelstücke (41, 42) umfasst, die derart ausgebildet sind, um an mindestens zwei separaten Aufnahmen (71, 72) einer Zugmaschine (10) ankoppelbar zu sein, und wobei sich am Fahrgestell (2) oder an der Koppeleinheit (4) der Feldspritze (1) kein Drehpunkt um eine Hochachse (33, 34) befindet, sodass die Zugmaschine (10) und die Feldspritze (1) starr um die Hochachse (33, 34) miteinander verbunden sind, und wobei sich am Fahrgestell (2) oder an einer Achse (3) mindestens ein um eine Hochachse (33, 34) schwenkbarer Radträger (31, 32) befindet.

2. Feldspritze (1) nach Anspruch 1, wobei die Koppeleinheit (4) ein erstes Koppelstück (41) zur Ankopplung an einen ersten Unterlenker (71) eines Dreipunkthubwerks (7), ein zweites Koppelstück (42) zur Ankopplung an einen zweiten Unterlenker (72) des Dreipunkthubwerks (7) und ein drittes Koppelstück (43) mit einer Aufnahme für einen Oberlenker (73) des Dreipunkthubwerks (7) umfasst.

3. Feldspritze (1) nach Anspruch 2, wobei die Nickbewegung zwischen Zugmaschine (10) und Feldspritze (1) durch einen längenveränderlichen Oberlenker (73) oder eine federnde Oberlenkeraufnahme in begrenztem Maße ermöglicht ist.

4. Feldspritze (1) nach Anspruch 1, wobei die Rotationsbewegung zwischen Zugmaschine (10) und Feldspritze (1) durch eine starre oder begrenzt bewegliche Verbindung um eine Längsachse unterbunden oder begrenzt ist.

5. Feldspritze (1) nach Anspruch 1, wobei ein erster Radträger (31) und ein zweiter Radträger (32) an der Achse (3) lenkbar angeordnet sind.

6. Feldspritze (1) nach Anspruch 1 und 5, wobei sich die Drehpunkte (33, 34) der Achse in Fahrtrichtung vor den Mittelpunkten der Räder (53, 54) befinden und die Radträger (31, 32) um weniger als 90 Grad in beide Richtungen drehbar gelagert sind.

7. Feldspritze (1) nach Anspruch 1 und 5, wobei die Lenkeinheit jeweils eine mit dem Radträger (31, 32) verbundene Spurstange (65) und einen Lenkaktor (64) umfasst.

8. Feldspritze (1) nach Anspruch 1, wobei die Räder (51, 52) des Fahrwerks einen Außendurchmesser von mindestens 1400 Millimeter aufweisen.

9. Feldspritze (1) nach Anspruch 1, wobei die Räder (51, 52) oder deren Radträger (31, 32) über eine Bremse und automatisierte Steuervorrichtung (61) verfügen.

10. Feldspritze (1) nach einem der vorangehenden Ansprüche, wobei das Fahrgestell (2) eine Federung umfasst, die derart ausgebildet ist, dass die Räder (51, 52) relativ zum Fahrgestell (2) eine Vertikalbewegung ausführen können.

11. Feldspritze (1) nach Anspruch 1, wobei sich die Position mindestens eines Koppelstücks (41, 42) entlang einer Querachse durch mindestens ein Verstellelement verändern und fixieren lässt, sodass sich der Abstand der beiden Koppelstücke (41, 42) entlang der Querachse verändert.

12. Feldspritze (1) nach Anspruch 11, wobei sich beide Koppelstücke (41, 42) durch mindestens ein Verstellelement entlang einer Querachse symmetrisch zur Längsachse verstellen lassen.
